# FASCICULE DE BREVET EUROPEEN

(11) **EP 0 635 337 B1**
(45) Date de publication et mention de la délivrance du brevet: **24.11.1999**
(21) Numéro de dépôt: 94401687.2
(22) Date de dépôt: 21.07.1994
(51) Int. Cl.: B25G 1/10, B29C 45/14

(54) **Procédé de fabrication d'un manche d'outil et outil muni d'un manche fabriqué par ce procédé**
Verfahren zur Herstellung eines Werkzeuggriffes und Werkzeug mit einem nach diesem Verfahren hergestellten Griff
Process for the manufacture of a tool handle and tool supplied with a handle made by this process

(30) Priorité: 23.07.1993 FR 9309135
(43) Date de publication de la demande: 25.01.1995
(73) Titulaire: BOST GARNACHE INDUSTRIES, F-39600 Arbois (FR)
(72) Inventeur: Roussel, Bernard, F-39600 Arbois (FR)
(74) Mandataire: Polus, Camille

(56) Documents cités:
- EP-A- 0 208 942
- DE-C- 3 926 254
- FR-A- 1 309 732
- FR-A- 2 271 003
- FR-A- 2 636 557
- US-A- 3 962 399
- US-A- 4 023 606
- US-A- 4 290 465
- US-A- 4 762 584
- US-A- 5 210 925
- DATABASE WPI Week 8329, Derwent Publications Ltd., London, GB; AN 83-717154 & WO-A-83 02220 (CREATIVE RES & MFG)

## Description

La présente invention concerne un procédé de fabrication d'un manche d'outil et un outil muni d'un manche fabriqué par ce procédé.

Elle s'applique en particulier à la fabrication d'outils munis de manches en plastique tels que des tournevis, des arrache-clous, etc...

On connaît déjà dans l'état de la technique un tournevis comportant une lame métallique munie d'un bout encastré dans un manche en plastique.

Il est connu de fabriquer un tournevis de ce type en moulant sur la lame du tournevis des couches successives en matières plastiques. L'ensemble des couches forme le manche du tournevis. La couche centrale, dans laquelle est encastrée la lame du tournevis, est moulée en premier et la couche délimitant la périphérie du manche est surmoulée sur cette couche centrale ou sur des couches intermédiaires.

Pour effectuer ces opérations, on utilise habituellement des presses à injecter comportant plusieurs têtes d'injection, généralement au nombre de deux ou trois.

Cependant, ces presses d'injection multitête sont d'un coût élevé si bien que, si l'on souhaite augmenter la production des tournevis à manche en plastique, il faut multiplier le nombre de presses d'injection multitête et donc procéder à des investissements très élevés.

Par ailleurs, les presses d'injection multitête sont spécialisées pour la fabrication de produits complexes en plastique injecté, par exemple des produits multimatière , et sont donc mal adaptées pour la fabrication de produits simples, fabriqués généralement en plus grand nombre que les produits complexes. Par conséquent, on préfère utiliser aussi souvent que cela se peut des presses à une ou deux têtes d'injection permettant de fabriquer des produits très divers en plastique injecté et d'un coût plus faible que les presses d'injection multitête comportant par exemple deux ou trois têtes d'injection.

US-A-4 023 606 décrit un procédé de fabrication d'un manche pour un outil, notamment un tournevis, comprenant un organe métallique muni d'une partie destinée à être encastrée dans le manche, le procédé étant du type dans lequel on fabrique un manchon, on place une broche métallique à l'intérieur du manchon et l'on moule par injection une partie de liaison en matière plastique entre la broche et le manchon, de manière que l'ensemble-manchon-partie de liaison forme le manche de l'outil.

L'invention a notamment pour but de proposer un outil à manche en plastique, par exemple un tournevis, fabriqué au moyen de presses classiques à une ou deux têtes d'injection pouvant être utilisées par ailleurs pour la fabrication de pièces en plastique très diverses, autres que des manches d'outils en plastique.

A cet effet l'invention a pour objet un procédé de fabrication d'un manche pour un outil, notamment un tournevis, le procédé étant du type décrit dans US-A-4 023 606 et caractérisé en ce que l'on place la broche métallique à l'intérieur du manchon de manière qu'elle s'étende sensiblement sur toute la longueur du manchon, ce dernier étant disposé dans un moule à injection de manière qu'au moins une de ses extrémités, ouverte, soit prolongée par une cavité du moule formant empreinte de moulage.

Suivant des caractéristiques de différents modes de réalisation de ce procédé:
- la broche métallique est formée par la partie d'encastrement de l'organe métallique;
- on retire la broche métallique du manche et l'on encastre à force la partie d'encastrement de l'organe métallique dans le trou laissé libre dans le manche après retrait de la broche;
- la broche métallique a une forme tronconique de manière à faciliter son retrait du manche et l'on alèse le trou laissé libre après retrait de la broche de manière à adapter ses dimensions à la partie d'encastrement de l'organe métallique;
- on fabrique le manchon avec au moins une matière plastique, en moulant par injection sur cette dernière une partie périphérique;
- la partie centrale du manchon comporte une matière plastique plus dure que celle de la partie périphérique du manchon;
- on moule la partie centrale du manchon et la partie périphérique de ce manchon de manière à former sur leurs surfaces en contact des saillies et des évidements complémentaires d'accrochage;
- l'empreinte de moulage entoure une extrémité du manchon de manière que, lors du moulage par injection de la partie de liaison, un prolongement de cette partie soit surmoulé sur l'extrémité du manchon, à l'extérieur de celui-ci, après que le matériau injecté ait cheminé le long du manchon;
- on surmoule la partie périphérique du manchon sur la partie centrale de ce manchon en laissant libre au moins une extrémité de la partie centrale de manière à permettre son recouvrement par le prolongement externe de la partie de liaison;
- le prolongement externe de la partie de liaison délimite l'extrémité libre du manche, ce prolongement et l'extrémité du manchon recouverte par celui-ci étant moulés de manière à former sur leurs surfaces en contact des saillies et des évidements complémentaires d'accrochage;
- l'empreinte de moulage entoure une extrémité de la broche métallique faisant saillie à l'extrémité du manchon , de manière que, lors du moulage par injection de la partie de liaison, un prolongement de cette partie soit surmoulé sur l'extrémité saillante de la broche, après que le matériau injecté ait cheminé le long du manchon;
- la partie de liaison comporte une matière plastique de dureté sensiblement identique à celle de la partie centrale du manchon.

L'invention a également pour objet un outil comportant un organe métallique muni d'une partie encastrée dans un manche, ce manche comprenant un manchon entourant une partie de liaison en plastique dans laquelle est encastrée l'organe métallique l'outil étant du type décrit dans US-A-4023606 et caractérisé en ce que la partie de liaison comporte au moins un prolongement externe au manchon recouvrant une extrémité de ce manchon ou une extrémité de la partie d'encastrement de la broche faisant saillie à l'extérieur du manchon.

Suivant d'autres caractéristiques de cet outil:
- le manchon est en plastique et comprend deux parties tubulaires, l'une centrale et l'autre périphérique, la partie périphérique s'étendant longitudinalement entre deux extrémités de la partie centrale recouvertes par deux prolongements externes de la partie de liaison recouvrant les deux extrémités du manchon;
- la partie centrale et la partie périphérique du manchon comprennent des matières plastiques de duretés différentes.

Des exemples de réalisation de l'invention seront décrits ci-dessous en se référant aux dessins annexés dans lesquels:
- la figure 1 est une vue en coupe longitudinale d'un tournevis muni d'un manche fabriqué par un procédé selon un premier mode de réalisation de l'invention;
- la figure 2 est une vue en coupe suivant la ligne 2-2 de la figure 1;
- la figure 3 est une vue en coupe suivant la ligne 3-3 de la figure 1;
- la figure 4 est une vue en coupe longitudinale d'un manchon en plastique utilisé pour la fabrication du manche de tournevis de la figure 1;
- la figure 5 est une vue en coupe longitudinale d'un manche de tournevis fabriqué par un procédé selon un second mode de réalisation de l'invention;
- la figure 6 est une vue similaire à la figure 5 d'un tournevis muni d'un manche de la figure 6;
- la figure 7 est une vue en coupe longitudinale d'un manche de tournevis fabriqué par un procédé selon un troisième mode de réalisation de l'invention.

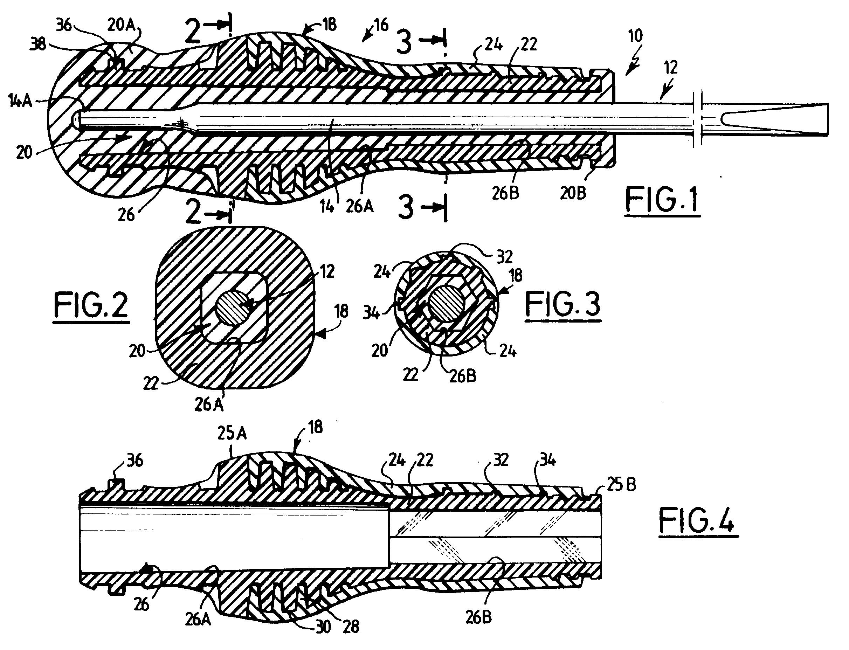

Le tournevis 10 représenté à la figure 1 comporte une tige métallique 12 formant lame munie d'un bout 14 encastré dans un manche 16 en plastique fabriqué selon un premier mode de réalisation de l'invention.

De façon classique, le bout d'encastrement 14 de la lame 12 comporte une extrémité aplatie 14A destinée à renforcer le blocage en rotation de la lame 12 autour de son axe.

Le manche 16 comprend un manchon 18 en plastique entourant une partie de liaison 20 en plastique dans laquelle est encastrée la lame 12.

Le manchon 18 comprend deux parties tubulaires sensiblement coaxiales 22,24 l'une centrale et l'autre périphérique, fabriquées de préférence, comme dans l'exemple décrit, dans des matières plastiques différentes.

La partie de liaison 20 et la partie centrale 22 du manchon sont fabriquées dans des matières plastiques plus dures que la matière plastique constituant la partie périphérique 24 du manchon.

De préférence, la partie de liaison 20 et la partie centrale 22 du manchon sont fabriquées dans des matières plastiques de duretés sensiblement identiques.

En variante, la partie périphérique 24 du manchon peut avoir une dureté sensiblement identique aux autres parties en plastique du manchon.

La partie périphérique 24 du manchon s'étend longitudinalement entre une bague annulaire 25A en saillie sur la partie centrale 22, séparant l'extrémité proximale de la partie 22 du reste de cette partie 22, et une collerette 25B délimitant l'extrémité distale de la partie centrale 22. Les deux extrémités distale et proximale de la partie centrale 22 du manchon sont recouvertes par des prolongements 20A, 20B de la partie de liaison 20, externes au manchon 18.

Le manchon 18 comporte une surface interne 26 adaptée pour solidariser de façon optimale le manchon 18 à la partie de liaison 20. Par exemple, comme on peut le voir en particulier sur les figures 2 et 3, la surface interne 26 du manchon 18 est délimitée par une première partie 26A, de section transversale sensiblement polygonale, de préférence carrée, s'étendant depuis l'extrémité libre du manche 16 jusqu'à une seconde partie 26B de cette surface interne, de section transversale sensiblement polygonale, de préférence hexagonale, et de périmètre inférieur à celui de la section transversale de la première partie 26A.

En variante, la surface interne du manchon 18 peut avoir des sections variées, constantes ou non.

On décrira maintenant un procédé de fabrication selon un premier mode de réalisation de l'invention du manche 16 de tournevis représenté à la figure 1.

Initialement, on fabrique le manchon en plastique 18, ouvert à ses deux extrémités, tel que représenté à la figure 4, en moulant par injection la partie centrale 22 et en surmoulant par injection sur cette dernière la partie périphérique 24.

Le surmoulage de la partie périphérique 24 sur la partie centrale 22 est effectué de manière à laisser libre les extrémités de cette partie centrale 22.

De façon à favoriser l'accrochage de la partie périphérique 24 du manchon sur la partie centrale 22 de ce manchon, on moule ces deux parties de manière à former sur leurs surfaces en contact des saillies et des évidements complémentaires 28 à 34.

Pour fabriquer le manchon 18, on utilise par exemple une presse classique à deux têtes d'injection (une tête par matière à injecter).

Après la fabrication du manchon 18, on place le bout d'encastrement 14 de la lame 12 à l'intérieur de ce manchon 18, coaxialement avec ce dernier, de manière que ce bout 14 s'étende sensiblement sur toute la longueur du manchon 18. Le manchon 18 et la lame 12 coaxiale à ce dernier sont disposés dans un moule à injection de manière qu'au moins une de ses extrémités ouvertes, de préférence ses deux extrémités comme dans l'exemple décrit, soit prolongée par une cavité du moule formant empreinte de moulage. Puis on moule par injection la partie de liaison 20 entre la lame 12 et le manchon 18 de manière que l'ensemble manchon 18-partie de liaison 20 forme le manche 16 du tournevis représenté à la figure 1.

Dans l'exemple décrit, les empreintes de moulage entourent les extrémités du manchon 18 de manière que, lors du moulage de la partie de liaison 20, les prolongements 20A, 20B de cette partie 20 soient surmoulés sur les extrémités du manchon 18, à l'extérieur de celui-ci.

Le bout d'encastrement 14 de la lame 12, qui s'étend sur toute la longueur du manchon 18, forme, lors du moulage de la partie de liaison 20, un conducteur thermique permettant d'évacuer la chaleur de la matière injectée à l'intérieur du manchon 18. On peut ainsi mouler une partie de liaison 20 dans une matière plastique relativement dure en obtenant un très bel aspect final du manche, sans rétreint de la partie de liaison 20.

La matière injectée est introduite de préférence par l'extrémité distale 25B du manchon 18. Le gradient de pression de la matière injectée se déplace donc de l'extrémité proximale vers l'extrémité distale du manchon 18 au cours de l'injection. Par conséquent, le prolongement proximal 20A de la partie de liaison 20 est moulé en premier, au début de l'injection, après que le matériau injecté ait cheminé le long du manchon 18 et avant la montée en pression de la matière injectée dans ce manchon 18. Ce prolongement proximal 20A, moulé au début de l'injection, empêche la déformation de l'extrémité proximale du manchon 18 lorsque l'injection se poursuit et que la pression de la matière injectée augmente dans le manchon 18.

Des saillies et des évidements complémentaires d'accrochage 36,38 sont venus de moulage avec les surfaces en contact du prolongement externe 20A de la partie de liaison 20, délimitant l'extrémité libre du manche 16, et de l'extrémité correspondante du manchon 18.

Le moulage de la partie de liaison 20 est effectué par exemple au moyen d'une presse classique à une tête d'injection.

En variante, l'extrémité du bout d'encastrement 14 de la lame peut affleurer à l'extrémité libre du manche ou dépasser cette extrémité. Dans ce cas, il est possible de recouvrir l'extrémité affleurante du bout d'encastrement par un bouchon fixé sur l'extrémité libre du manche par des moyens connus.

Bien entendu, la fabrication du manchon 18 et le moulage de la partie de liaison 20 peuvent être effectués sur des sites différents.

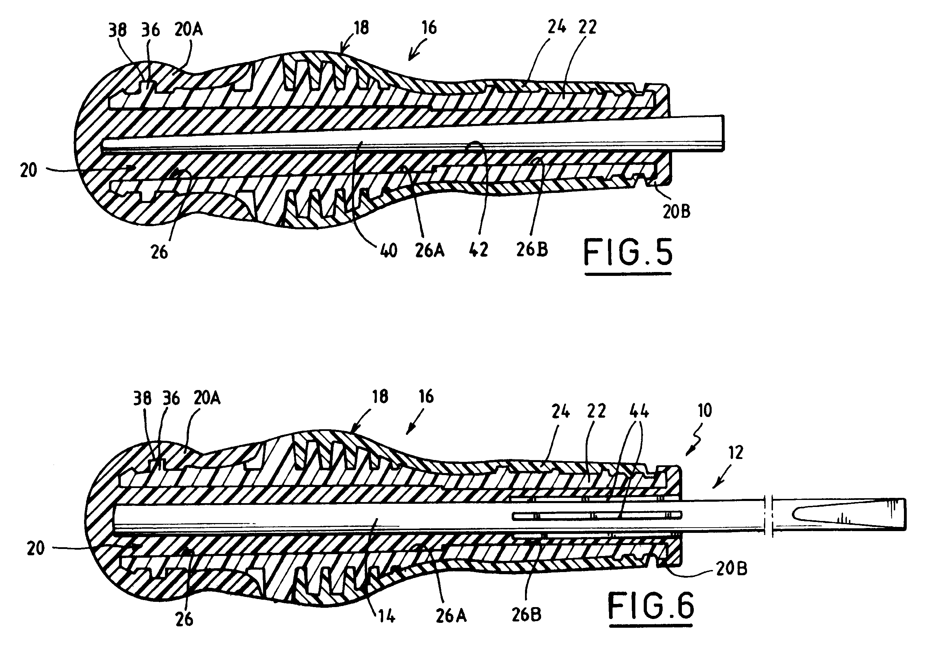

On décrira maintenant un procédé de fabrication selon un second mode de réalisation de l'invention du manche 16 de tournevis représenté aux figure 5 et 6.

Sur ces figure, les éléments analogues à ceux des figures précédentes sont désignés par des références identiques.

Ce second mode de réalisation du procédé diffère du premier mode de réalisation en ce que, après la fabrication du manchon 18, on place une broche 40 à l'intérieur du manchon 18, coaxialement avec ce dernier, puis on moule par injection la partie de liaison 20 entre la broche 40 et le manchon 18.

Le moulage de la partie de liaison 20 est effectuée dans les mêmes conditions que pour le procédé de fabrication selon le premier mode de réalisation.

Ensuite, on retire la broche métallique 40 du manche 16 et l'on encastre à force la partie d'encastrement 14 de la lame 12 dans le trou 42 laissé libre dans le manche après retrait de la broche 40.

La partie d'encastrement de la lame 12, représentée à la figure 6, diffère de la partie d'encastrement de la lame 12 représentée à la figure 1, en ce qu'elle comporte des ailettes 44, réparties sur le contour de la lame 12 en étant espacées entre elles de 90°, destinées à renforcer le blocage en rotation de la lame 12 autour de son axe.

De préférence, la broche métallique 40 a une forme tronconique de manière à faciliter son retrait du manche, et le trou 42 laissé libre après retrait de la broche est alésé de manière à adapter ses dimensions à la partie d'encastrement 14 de la lame 12.

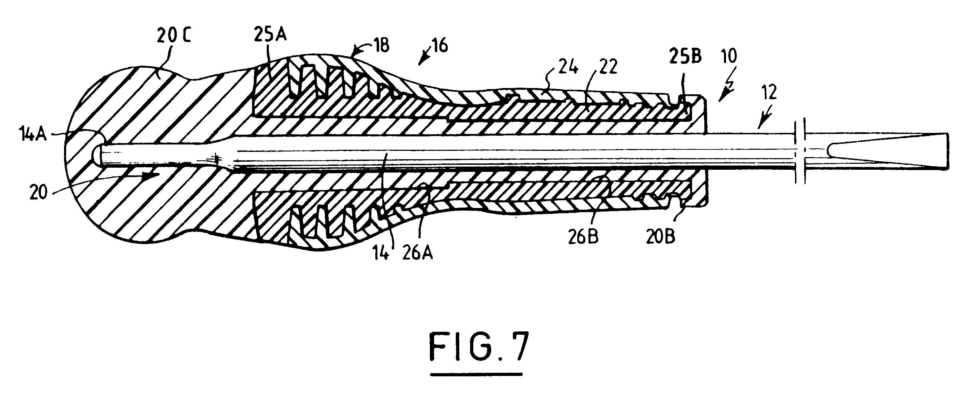

On a représenté à la figure 7 un manche 16 de tournevis fabriqué selon un troisième mode de réalisation de l'invention.

Sur cette figure, les éléments analogues à ceux des figures précédentes sont désignés par des références identiques .

Dans ce cas, l'extrémité proximale du manchon 18 est délimité par la bague 25A. L'extrémité aplatie 14A du bout d'encastrement 14 de la lame fait saillie à l'extérieur du manchon 18.

Le moulage de la partie de liaison 20 est effectué dans des conditions analogues à celles du procédé de fabrication selon le premier mode de réalisation.

Dans ce cas, cependant, lors du moulage de la partie de liaison 20, une empreinte de moulage entoure l'extrémité saillante 14A du bout d'encastrement 14, de manière à surmouler sur cette extrémité 14A un prolongement 20C de la partie de liaison 20, après que le matériau injecté ait cheminé le long du manchon 18.

L'invention ne se limite pas aux modes de réalisation décrits.

L'invention permet de fabriquer des outils, autre que des tournevis, comportant un manche dans lequel est encastrée une partie d'un organe métallique, cette partie encastrée traversant partiellement ou totalement le manche suivant sa longueur.

Le manchon peut être fabriqué par tout moyen. Il peut être fabriqué en une seule matière, celle-ci pouvant être autre que du plastique par exemple du bois ou du métal.

Le manchon peut être fermé à une extrémité de manière que sa surface interne soit délimitée par un trou borgne.

L'invention comporte de nombreux avantages.

Elle permet de fabriquer outil avec un manche en plastique, tel qu'un tournevis, un arrache-clous, etc..., en utilisant des presses classiques comprenant une ou deux têtes d'injection, peu coûteuses et pouvant être utilisées par ailleurs pour fabriquer d'autres pièces en plastique autres que des manches d'outils.

## Revendications

1. Procédé de fabrication d'un manche (16) pour un outil, notamment un tournevis, comprenant un organe métallique (12) muni d'une partie (14) destinée à être encastrée dans le manche (16), le procédé étant du type dans lequel :
- on fabrique un manchon (18);
- on place une broche métallique (14;40) à l'intérieur du manchon (18) ; et
- on moule par injection une partie de liaison en matière plastique entre la broche (14;40) et le manchon (18), de manière que l'ensemble-manchon (18)-partie de liaison (20) forme le manche (16) de l'outil ;
**caractérisé en ce que** l'on place la broche métallique (14;40) à l'intérieur du manchon (18) de manière qu'elle s'étende sensiblement sur toute la longueur du manchon, ce dernier étant disposé dans un moule à injection de manière qu'au moins une de ses extrémités, ouverte, soit prolongée par une cavité du moule formant empreinte de moulage.

2. Procédé selon la revendication 1, caractérisé en ce que la broche métallique est formée par la partie d'encastrement (14) de l'organe métallique (12).

3. Procédé selon la revendication 1, caractérisé en ce que l'on retire la broche métallique (40) du manche (16) et l'on encastre à force la partie d'encastrement (14) de l'organe métallique dans le trou (42) laissé libre dans le manche après retrait de la broche (40).

4. Procédé selon la revendication 3, caractérisé en ce que la broche métallique (40) a une forme tronconique de manière à faciliter son retrait du manche (16) et en ce que l'on alèse le trou (42) laissé libre après retrait de la broche (40) de manière à adapter ses dimensions à la partie d'encastrement (14) de l'organe métallique.

5. Procédé selon l'une quelconque des revendications 1 à 4, caractérisé en ce que l'on fabrique le manchon avec au moins une matière plastique, en moulant par injection une partie centrale (22) et en surmoulant par injection sur cette dernière une partie périphérique (24).

6. Procédé selon la revendication 5, caractérisé en ce que la partie centrale (22) du manchon comporte une matière plastique plus dure que celle de la partie périphérique (24) du manchon.

7. Procédé selon la revendication 5 ou 6, caractérisé en que l'on moule la partie centrale (22) du manchon et la partie périphérique (24) de ce manchon de manière à former sur leurs surfaces en contact des saillies et des évidements complémentaires d'accrochage (28 à 34).

8. Procédé selon l'une quelconque des revendications 1 à 7, caractérisé en ce que l'empreinte de moulage entoure une extrémité du manchon (18) de manière que, lors du moulage par injection de la partie de liaison (20), un prolongement (20A, 20B) de cette partie (20) soit surmoulé sur l'extrémité du manchon, à l'extérieur de celui-ci, après que le matériau injecté ait cheminé le long du manchon (18).

9. Procédé selon les revendications 5 et 8 prises ensemble, caractérisé en ce que l'on surmoule la partie périphérique (24) du manchon sur la partie centrale (22) de ce manchon en laissant libre au moins une extrémité de la partie centrale (22) de manière à permettre son recouvrement par le prolongement externe (20A, 20B) de la partie de liaison (20).

10. Procédé selon la revendication 8 ou 9, caractérisé en ce que le prolongement externe (20A) de la partie de liaison délimite l'extrémité libre du manche (16), ce prolongement (20A) et l'extrémité du manchon (18) recouverte par celui-ci étant moulés de manière à former sur leurs surfaces en contact des saillies et des évidements complémentaires d'accrochage (36,38).

11. Procédé selon l'une quelconque des revendication 1 à 7, caractérisé en ce que l'empreinte de moulage entoure une extrémité (14A) de la broche métallique (14) faisant saillie à l'extrémité du manchon (18), de manière que, lors du moulage par injection de la partie de liaison (20), un prolongement (20C) de cette partie soit surmoulé sur l'extrémité saillante (14A) de la broche (14), après que le matériau injecté ait cheminé le long du manchon (18).

12. Procédé selon l'une quelconque des revendications 5 à 11, caractérisé en ce que la partie de liaison (20) comporte une matière plastique de dureté sensiblement identique à celle de la partie centrale (22) du manchon.

13. Outil comportant un organe métallique (12) muni d'une partie (14) encastrée dans un manche (16), ce manche (16) comprenant un manchon (18) entourant une partie de liaison (20) en plastique dans laquelle est encastrée l'organe métallique (12), caractérisé en ce que la partie de liaison (20) comporte au moins un prolongement (20A,20B;20C) externe au manchon (18) recouvrant une extrémité de ce manchon ou une extrémité de la partie d'encastrement (14) de la broche faisant saillie à l'extérieur du manchon (18).

14. Outil selon la revendication 13, caractérisé en ce que le manchon est en plastique et comprend deux parties tubulaires (22,24), l'une centrale et l'autre périphérique, la partie périphérique (24) s'étendant longitudinalement entre deux extrémités de la partie centrale (22) recouvertes par deux prolongements externes (20A,22B) de la partie de liaison (20) recouvrant les deux extrémités du manchon (18).

15. Outil selon la revendication 14, caractérisé en ce que la partie centrale (22) et la partie périphérique (24) du manchon comprennent des matières plastiques de duretés différentes.

## Claims

1. Method of manufacturing a handle (16) for a tool, especially a screwdriver, comprising a metal component (12) fitted with a part (14) intended to be embedded in the handle (16), the method being of the type in which :
- a sleeve (18) is manufactured
- a metal spindle (14;40) is placed inside the sleeve (18) ; and
- a bonding part in plastics material is injection moulded between the spindle (14;40) and the sleeve (18) in order that the assembly - sleeve (18)/bonding part (20) forms the tool handle (16);
**characterised in that** the metal spindle (14;40) is placed inside the sleeve (18) in such a manner that it appreciably extends over the whole length of the sleeve, the latter being placed in an injection mould in such a way that at least one of its ends, open, is extended by a hollow in the mould forming a moulding cavity.

2. Method according to claim 1, **characterised in** that the metal spindle is formed by the embedding part (14) of the metal component (12).

3. Method according to claim 1, **characterised in that** one removes the metal spindle (40) from the handle (16) and that the embedding part (14) of the metal component is force fitted in the hole (42) left open in the handle after the withdrawal of the spindle (40).

4. Method according to claim 3, **characterised in that** the metal spindle (40) has a tapered shape in order to facilitate its withdrawal from the handle (16) and in that the hole (42) left open after the withdrawal of the spindle (40) is bored in order to adapt its size to the embedding part (14) of the metal component.

5. Method according to any one of the claims 1 to 4, **characterised in that** the sleeve is manufactured with at least one plastics material injection moulding a central part (22) and by injection moulding from a casting on the latter a peripheral part (24).

6. Method according to claim 5, **characterised in** that the central part (22) of the sleeve comprises a plastic material harder than that of the peripheral part (24) of the sleeve.

7. Method according to claim 5 or 6, **characterised in that** the central part (22) of the sleeve and the peripheral part (24) of this sleeve are moulded so as to form on their contact surfaces projections and complementary securing recesses (28 to 34).

8. Method according to any one of claims 1 to 7, **characterised in that** the moulding cavity surrounds one end of the sleeve (18) so that, when the bonding part (20) is injection moulded, an extension (20A,20B) of this part (20) is moulded from a casting on the outside of the end of the sleeve, after the material injected has spread on the length of the sleeve (18).

9. Method according to claims 5 and 8 taken together, **characterised in that** the peripheral part (24) of the sleeve is moulded from a casting on the central part (22) of this sleeve, leaving free at least one end of the central part (22) so as to allow it to be overlapped by the external extension (20A,20B) of the bonding part (20).

10. Method according to claim 8 or 9, **characterised in that** the external extension (20A) of the bonding part defines the free end of the handle (16), this extension (20A) and the end of the sleeve (18) overlapped by same being moulded so as to form on the contact surfaces projections and complementary securing recesses (36,38).

11. Method according to any one of claims 1 to 7, **characterised in that** the moulding cavity surrounds one end (14A) of the metal spindle (14) protruding at the end of the sleeve (18) in order that, at the time of the injection moulding of the bonding part (20), an extension (20C) of this part is moulded from a casting on the protruding end (14A) of the spindle (14) after the injection material has spread along the sleeve (18).

12. Method according to any one of claims 5 to 11, **characterised in that** the bonding part (20) comprises a plastics material of hardness appreciably identical to that of the central part (22) of the sleeve.

13. Tool comprising a metal component (12) fitted with a part (14) embedded in the handle (16), this handle (16) comprising a sleeve (18) surrounding a bonding part (20) in plastics material in which the metal component is embedded (12) **characterised in that** the bonding part (20) comprises at least one extension (20A, 20B; 20C) external to the sleeve (18) overlapping one end of this sleeve or one end of the embedding part (14) of the spindle protruding outside the sleeve (18).

14. Tool according to claim 13, **characterised in that** the sleeve is of plastics material and comprises two tubular parts (22,24), one central and the other peripheral, the peripheral part (24) extending longitudinally between the two ends of the central part (22) overlapped by two external extensions (20A,20B) of the bonding part (20) overlapping the two ends of the sleeve (18).

15. Tool according to claim 14, **characterised in that** the central part (22) and the peripheral part (24) of the sleeve comprise plastics materials of different hardnesses.

## Patentansprüche

1. Verfahren zur Herstellung eines Griffs (16) für ein Werkzeug, insbesondere einen Schraubendreher mit einem metallischen Element (12), das mit einem Teil (14) versehen ist, der dazu bestimmt ist, in den Griff (16) eingesteckt zu Werden, wobei das Verfahren die Schritte aufweist:
- Herstellen einer Hülse (18);
- Anordnen einer metallischen Welle (14; 40) im Innern der Hülse (18), und
- Spritzgießen eines Verbindungsteils aus Kunststoff zwischen die Welle (14; 40) und die Hülse (18) derart, daß die Einheit aus Hülse (18) und Verbindungsteil (20) den Griff 16 des Werkzeugs bildet;
dadurch gekennzeichnet, daß die metallische Welle (14; 40) im Innern der Hülse (18) derart angeordnet wird, daß sie sich im wesentlichen über die gesamte Länge der Hülse erstreckt, wobei Letztere in einer Spritzgußform derart angeordnet wird, daß zumindest eines ihrer offenen Enden durch einen Hohlraum der Gießform verlängert ist, welcher die Formeintiefung bildet.

2. Verfahren nach Anspruch 1, dadurch gekennzeichnet, daß die metallische Welle durch den Einsteckteil (14) des metallischen Elements (12) gebildet ist.

3. Verfahren nach Anspruch 1, dadurch gekennzeichnet, daß die metallische Welle (40) des Griffs (16) zurückgezogen wird und daß das Einsteckteil (14) des metallischen Elements in das Loch (42) unter Kraftaufwendung eingesteckt wird, das in dem Griff nach dem Zurückziehen der Welle (40) zurückbleibt.

4. Verfahren nach Anspruch 3, dadurch gekennzeichnet, daß die metallische Welle (40) Kegelstumpfform derart aufweist, daß ihr Zurückziehen aus dem Griff (16) unterstützt wird, und daß das zurückgelassene Loch (42) nach dem Zurückziehen der Welle (40) derart aufgebaut wird, daß seine Abmessungen an den Einsteckteil (14) des metallischen Elements angepaßt sind.

5. Verfahren nach einem der Ansprüche 1 bis 4, dadurch gekennzeichnet, daß die Hülse (18) aus zumindest einem Kunststoffmaterial hergestellt wird, indem ein zentraler Teil (22) spritzgegossen wird und indem auf diesen Teil ein Umfangsteil (24) spritzgegossen wird.

6. Verfahren nach Anspruch 5, dadurch gekennzeichnet, daß der zentrale Teil (22) der Hülse ein Kunststoffmaterial umfaßt, das härter ist als dasjenige des Umfangsteils (24) der Hülse.

7. Verfahren nach Anspruch 5 oder 6, dadurch gekennzeichnet, daß der zentrale Teil (22) der Hülse und der Umfangsteil (24) dieser Hülse derart spritzgegossen werden, daß auf ihren Oberflächen im Kontakt stehende komplementäre Verankerungsvorsprünge und -ausnehmungen (28 bis 34) gebildet werden.

8. Verfahren nach einem der Ansprüche 1 bis 7, dadurch gekennzeichnet, daß die Formeintiefung ein Ende der Hülse (18) derart umschließt, daß beim Spritzgießen des Verbindungsteils (20) eine Verlängerung (20A, 20B) dieses Teils (20) auf das Ende der Hülse an deren Ende spritzgegossen wird, nachdem das spritzgegossene Material entlang der Hülse (18) sich ausgebreitet hat.

9. Verfahren nach Anspruch 5 und 8 zusammengenommen, dadurch gekennzeichnet, daß der Umfangsteil (24) der Hülse auf den zentralen Teil (22) dieser Hülse unter Freilassen Von zumindest einem Ende des zentralen Teils (22) derart spritzgegossen wird, daß ihre Überdeckung durch die äußere Verlängerung (20A, 20B) des Verbindungsteils (20) möglich ist.

10. Verfahren nach Anspruch 8 oder 9, dadurch gekennzeichnet, daß die äußere Verlängerung (20A) des Verbindungsteils das freie Ende des Griffs (16) begrenzt, wobei diese Verlängerung (20A) und das Ende der Hülse (18), das durch diese abgedeckt ist, derart spritzgegossen werden, daß auf ihren Oberflächen im Kontakt stehende komplementäre Verankerungsvorsprünge und -ausnehmungen (36, 38) gebildet werden.

11. Verfahren nach einem der Ansprüche 1 bis 7, dadurch gekennzeichnet, daß die formeintiefung ein Ende (14A) der metallischen Welle (14) umschließt, das zum Ende der Hülse (18) vorspringt, derart, daß beim Spritzgießen des Verbindungsteils (20) eine Verlängerung (20C) dieses Teils auf das vorspringende Ende (14A) der Welle (14) spritzgegossen wird, nachdem das spritzgegossene Material entlang der Hülse (18) sich ausgebreitet hat.

12. Verfahren nach einem der Ansprüche 5 bis 11, dadurch gekennzeichnet, daß der Verbindungsteil (20) ein Kunststoffmaterial einer Härte umfaßt, die im wesentlichen identisch zu derjenigen des zentralen Teils (22) der Hülse ist.

13. Werkzeug mit einem metallischen Element (12), das mit einem Teil (14) versehen ist, der in einen Griff (16) gesteckt ist, wobei dieser Griff (16) eine Hülse (18) umfaßt, die einen Verbindungsteil (20) aus Kunststoff umschließt, in welchen das metallische Element (12) gesteckt ist, dadurch gekennzeichnet, daß das Verbindungsteil (20) zumindest eine Verlängerung (20A, 20B; 20C) außerhalb der Hülse (18) umfaßt, die ein Ende dieser Hülse oder ein Ende des Einsteckteils (14) der Welle abdeckt, das aus der Hülse (18) vorsteht.

14. Werkzeug nach Anspruch 13, dadurch gekennzeichnet, daß die Hülse aus Kunststoff besteht und zwei Rohrteile (22, 24) umfaßt, von denen eines ein zentrales Teil und das andere ein Umfangsteil ist, wobei das Umfangsteil (24) sich in Längsrichtung zwischen zwei Enden des zentralen Teils (22) erstreckt, die durch zwei äußere Verlängerungen (20A, 20B) des Verbindungsteils (20) abgedeckt sind, welche die zwei Enden der Hülse (18) abdecken.

15. Werkzeug nach Anspruch 14, dadurch gekennzeichnet, daß der zentrale Teil (22) und der Umfangsteil (24) der Hülse Kunststoffmaterialien unterschiedlicher Härten umfassen.
